# EUROPÄISCHE PATENTSCHRIFT

(11) **EP 0 519 269 B1**
(45) Veröffentlichungstag und Bekanntmachung des Hinweises auf die Patenterteilung: **26.02.1997**
(21) Anmeldenummer: 92109348.0
(22) Anmeldetag: 03.06.1992
(51) Int. Cl.: G11B 9/00

(54) **Verfahren zur gezielten Modifikation einzelner Nanometer-Strukturen einer Festkörperoberfläche**
Method for targeted modification of isolated nanometer structures of a solid state body surface
Procédé de modification ciblée de structures isolées nanométriques d'une surface d'un corps à l'état solide

(30) Priorität: 20.06.1991 DE 4120365
(43) Veröffentlichungstag der Anmeldung: 23.12.1992
(73) Patentinhaber: BASF Aktiengesellschaft, 67063 Ludwigshafen (DE)
(72) Erfinder: Fuchs, Harald, Dr., W-6719 Carlsberg (DE); Schimmel, Thomas, Dr., W-8670 Hof (DE)

(56) Entgegenhaltungen:
- EP-A- 0 436 175
- EP-A- 0 445 825
- EP-A- 0 457 168
- WO-A-88/04470
- US-A- 4 896 044
- JOURNAL OF VACUUM SCIENCE AND TECHNOLOGY Bd. 6, Nr. 2, March/April 1988, NEW YORK, USA Seiten 537-539 U. STAUFER ET AL.
- APPLIED PHYSICS LETTERS, Bd. 51, Nr. 4, 27. Juli 1987, NEW YORK, USA Seiten 244 - 246 U. STAUFER ET AL.

## Beschreibung

Die vorliegende Erfindung betrifft ein Verfahren, das es erlaubt, gezielte Modifikationen an einzelnen bestehenden kleinsten Oberflächenstrukturen mit Dimensionen im Nanometer- und im atomaren Bereich durchzuführen, sowie die Anwendung dieses Verfahrens zur Speicherung von Informationseinheiten im Nanometer- und Subnanometerbereich und zur Änderung bereits gespeicherter solcher Informationseinheiten.

Die kontrollierte Durchführung von Manipulationen an bereits bestehenden Oberflächenstrukturen im Nanometerbereich ist auf dem Gebiet der Nanotechnologie von besonderem Interesse. Ein Verfahren, das solche Manipulationen erlaubt, würde es z.B. ermöglichen, kompliziertere Strukturen in einem mehrstufigen Prozeß schrittweise aus einfacheren Strukturen, etwa aus rotationssymmetrischen Hügeln, wie sie durch Spannungspulsen mit dem Tunnelmikroskop herstellbar sind, zu generieren. Solche Möglichkeiten wiederum könnten die Basis für ein "Nano-Engineering" bilden, d.h. für eine systematische Materialbearbeitung auf einer Längenskala bis in den Nanometer- und gegebenenfalls in den atomaren Bereich.

Denkt man auf der anderen Seite an mögliche Anwendungen von Nanostrukturierungsverfahren für die Datenspeicherung, so ergibt sich das Bedürfnis, Informationen nicht nur schreiben, sondern bereits gespeicherte Informationen auch löschen oder gezielt verändern zu können. Dabei ist es wünschenswert, nicht nur den gesamten Datenspeicher etwa durch thermische Behandlung, sondern auch Einzelinformationen Bit für Bit gezielt zu löschen und bei Bedarf an der gleichen Stelle neu schreiben zu können.

Eine interessante Perspektive ergibt sich auch aus der Vorstellung, daß man pro Position nicht nur wahlweise einen von zwei (binären) klar voneinander unterscheidbaren definierten Zuständen erzeugen kann (z.B. "Struktur vorhanden" oder "Struktur nicht vorhanden", was den Zahlenwerten "0" bzw. "1" entspricht und damit einen Informationsgehalt von 1 Bit je Position), sondern z.B. von drei oder mehr definierten Zuständen (z.B. "keine Struktur vorhanden", "unmodifizierte Struktur vorhanden" oder "nachträglich in definierter Weise modifizierte Struktur vorhanden", was den Zahlenwerten "0" bzw. "1" und "2" entspricht und damit einen Informationsgehalt von mehr als 1 Bit je Position erlaubt).

In der Vergangenheit wurden verschiedene Verfahren zur Erzeugung von Oberflächenstrukturen auf der Skala von Nanometern entwickelt. Um die obengenannten Vorstellungen zu realisieren ist es aber notwendig, solche Strukturen nach erfolgter Erzeugung jederzeit modifizieren zu können. Dabei ist es wünschenswert, daß eine solche Modifikation selektiv und definiert erfolgen kann. Selektiv bedeutet dabei, daß die zu modifizierende Struktur einzeln angesteuert werden kann, und daß die Modifikation einer Struktur keine wesentlichen Auswirkungen auf benachbarte Strukturen hat. Definiert bedeutet, daß die Auswirkung der Modifikation bekannt, vorhersagbar und reproduzierbar ist, d.h. daß die Struktur von einem definierten Ausgangszustand in einen definierten Endzustand gebracht wird.

In der EP 0 436 175-A2 wird ein Verfahren zur zeitlich stabilen Speicherung von Informationseinheiten im Nanometerbereich beschrieben, bei dem die Oberfläche eines halbleitenden Schichtmaterials mittels einer oberflächensensitiven Rastersonde ohne Veränderung der atomaren Ordnung plastisch verformt wird.

In der EP 0 457 168-A2 wird ein Verfahren zur zeitlich stabilen Markierung einzelner Atome oder Atomgruppen einer Festkörperoberfläche beschrieben, wobei diese in der Festkörperoberfläche ohne wesentliche Veränderung der atomaren Gitterstruktur parallel zur Festkörperoberfläche und ohne Beteiligung von Fremdatomen in eine gegenüber dem Ausgangszustand veränderte strukturelle oder elektronische Konfiguration gebracht werden.

Die EP 0 445 825-A2 bezieht sich auf ein Informationsaufzeichnungsverfahren, bei dem das Abtasten des Aufzeichnungsmediums durch eine relativ zur Oberfläche des Aufzeichnungsmediums bewegte Sonde erfolgt, das zwei oder mehr Arten von Zustandsänderungen relativ zum Ausgangszustand zu bilden vermag, und ein Aufzeichnungsverfahren unter Einsatz der das relative Abtasten bewirkenden Sonde, wobei das Aufzeichnungsverfahren durch intermittierende Bildung von bits auf dem Aufzeichnungsmedium bewerkstelligt wird und jeder dieser bits mit einem der zwei oder mehr Arten von Zustandsänderungen in Übereinstimmung mit der aufzuzeichnenden Information ist. Diese Schrift bezieht sich auf das Schreiben und Speichern von Informationen (Durchmesser der bits 30 nm) unter Einsatz von Spannungspulsen.

In WO 88/04470 wird ein Verfahren zur Erzeugung von Oberflächenstrukturen auf elektrisch leitenden oder halbleitenden Substratoberflächen im Bereich atomarer Dimensionen mit einem feinen Elektronenstrahl unter Verwendung eines Rastertunnelmikroskops beschrieben, wobei an ausgewählten Bereichen der Substratoberfläche, welche in Nanometerdimensionen liegen, hohe lokale Stromdichten von Tunnelelektronen im Elektronenvoltbereich erzeugt und damit Phasenumwandlungen thermisch eingeleitet werden. Die atomare Ordnung wird hierbei durch lokales Aufschmelzen zerstört.

Aufgabe der vorliegenden Erfindung ist es daher, ein Verfahren bereitzustellen, das eine solche selektive und definierte Modifikation von Strukturen im Nanometerbereich erlaubt. Daß das Verfahren auch auf größere Strukturen übertragbar ist, ist eine weitere Aufgabe.

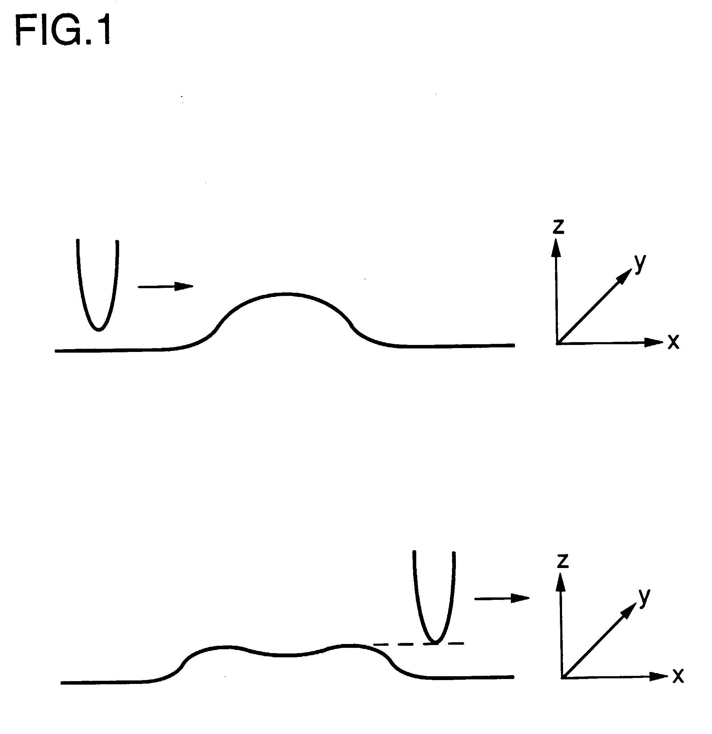

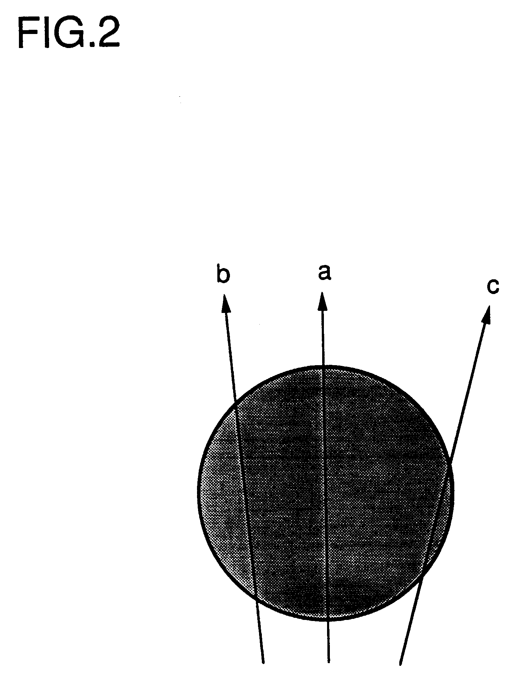

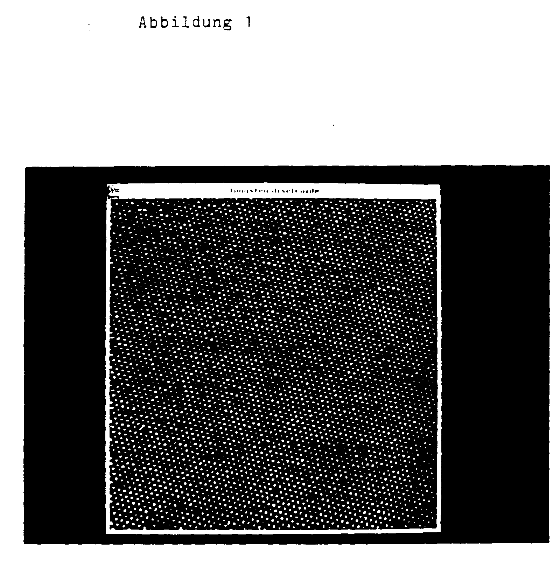

Es wurde gefunden, daß sich die geschilderten Aufgaben mit dem der vorliegenden Erfindung zu Grunde liegenden Verfahren nach Anspruch 1 lösen lassen. Dabei wird eine Sonde mit sehr feinem Ende, etwa die Spitze einer oberflächensensitiven Rastersonde, neben der zu modifizierenden Struktur unmittelbar über der Oberfläche positioniert und anschließend unter weitgehender Beibehaltung ihres Abstandes von der Ebene der unstrukturierten Probenoberfläche (xy-Ebene in Figur 1) über die Hügelstruktur hinweggeführt, wodurch es bei Begegnung der Spitze mit der Hügelstruktur durch mechanische Krafteinwirkung zu einer Veränderung derselben kommt.

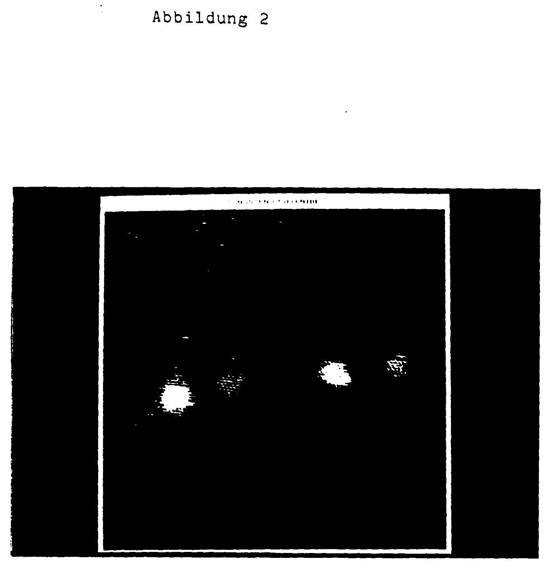

Das Verfahren hat zugleich den Vorteil, daß das Ausmaß der gewünschten Veränderung durch den Abstand, in dem sich die Sonde über der Probenoberflächenebene (x-y-Ebene von Figur 1) befindet, kontinuierlich und kontrolliert eingestellt werden kann. Außerdem kann man wählen, ob man die ganze Struktur oder aber nur eine ihrer Seitenflanken modifizieren will, indem man die Sonde über den Mittelpunkt der Struktur (Bahn a in Figur 2; die unmodifizierte Struktur ist in Figur 2 in Draufsicht schraffiert dargestellt) oder nur über eine oder mehrere ihrer Seitenflanken (z.B. Bahnen b, c in Figur 2) führt. Auch ist es so möglich, an der gleichen Struktur sukzessive mehrere Veränderungen auszuführen, die sich etwa in der Wahl des Abstandes der Sonde von der a-b-Ebene und/oder in der gewählten Bahn der Sonde unterscheiden können.

Denkt man an ein Löschen von bestehenden Oberflächenstrukturen oder an zahlreiche aufeinanderfolgende Modifikationsprozesse an ein- und derselben Struktur, so ist es von erheblichem Vorteil, wenn die atomare Ordnung des gefundenen Atomgitters an der Oberfläche weder beim Prozess der Erzeugung der Strukturen noch bei dem eben beschriebenen Modifikationsprozess lokal gestört oder zerstört wird. Besonders vorteilhaft erweist sich in dieser Hinsicht die Verwendung von Schichtstrukturen, insbesondere von Dichalkogeniden, wie etwa Wolframdiselenid, WSe₂. Hier ist eine Erzeugung von Oberflächenstrukturen unter vollständigem Erhalt der atomaren Ordnung der mittels STM beobachteten Oberfläche sowohl am Ort der erzeugten Struktur als auch in ihrer Umgebung möglich, wenn man die Strukturen mit einer feinen Sonde mechanisch oder durch Anlegen von Spannungspulsen zwischen Probe und Sonde generiert.

Verwendet man als Sonde für die Modifikation eine oberflächensensitive Rastersonde, etwa die Spitze eines Raster-Tunnelmikroskops oder eines Raster-Kraftmikroskops, so läßt sich die Struktur vor und nach erfolgter Modifikation abbilden, bei geeigneter Wahl der Oberflächen und der Meßparameter auch mit atomarer Auflösung. Es ist damit also möglich, Schreib-, Lese-, Modifikations- und Löschoperationen in beliebiger Reihenfolge an beliebig auswählbaren Positionen mit ein- und derselben Sonde durchzuführen. Die Arbeitsgeschwindigkeit ist lediglich durch technische Daten der verwendeten Apparatur begrenzt. Bei den im folgenden vorgestellten Versuche benötigt man ca. 1 ms je Einzeloperation.

Das erfindungsgemäße Verfahren wird im folgenden beispielhaft erläutert:

Die Spitze eines Rastertunnelmikroskopes wird im folgenden Beispiel einer solchen Operation im Nanometerbereich in dreifacher Weise verwendet. Zum einen dient sie zur Abbildung der unveränderten sowie der modifizierten Oberflächen mit atomarer Auflösung, zum anderen dient sie der Erzeugung von Strukturen auf der Festkörperoberfläche und zum dritten dient sie der Modifikation dieser Strukturen nach dem erfindungsgemäßen Verfahren.

Das beschriebene Verfahren kann dabei wahlweise unter sehr unterschiedlichen Umgebungsbedingungen ausgeführt werden, z.B. unter Öl, im Hochvakuum, im Ultrahochvakuum oder unter Inertgas. Von besonderer praktischer Bedeutung ist dabei, daß alle beschriebenen Prozesse auch unter normalen Umgebungsbedingungen, d.h. an Luft und bei Raumtemperatur ausführbar sind und die resultierenden Strukturen und Modifikationen unter diesen Bedingungen auch stabil sind.

Als Oberfläche wurden Probenoberflächen des Schichthalbleiters WSe₂, eines Dichalkogenides, verwendet, die nach der "vapour phase transport method" hergestellt wurden. Solche Proben zeigen atomar ebene, über sehr weite Bereiche defektfreie Oberflächen mit sehr guter langreichweitiger Ordnung, die mit dem RTM problemlos mit atomarer Auflösung abgebildet werden können. Ein Beispiel einer solchen atomar geordneten WSe₂-Oberfläche vor Durchführung einer Oberflächenmodifikation zeigt Abbildung 1. Die einzelnen, als helle Punkte erkennbaren Atome haben einen Abstand von 0,33 nm. Für die Abbildung wurde eine Tunnelspannung von 0,8 V (Spitze positiv gepolt) zwischen Spitze und Probe angelegt; der Tunnelstrom betrug 3 nA.

Durch Addition von Spannungspulsen mit einer Amplitude von ca. 2,5 V und einer Dauer von wenigen Millisekunden auf die Tunnelspannung wurden kreisrunde Hügel auf der Probenoberfläche erzeugt. Die Polarität der Pulse entsprach dabei der Polarität der Tunnelspannung. Mit jedem Puls wurde dabei genau ein Hügel an der Position erzeugt, an der der Puls angewandt wurde. Die Oberflächenmodifikationen konnten während des normalen Abbildungsprozesses des RTM erzeugt werden, ohne daß hierzu der Scan der Tunnelspitze über die Probenoberfläche unterbrochen werden mußte. Die resultierenden Veränderungen der Oberfläche konnten unmittelbar nach dem Eingiff mit der gleichen Tunnelspitze mit atomarer Auflösung abgebildet werden. Abbildung 2 zeigt vier Hügel, die sich in einer Linie befinden und die mit vier Spannungspulsen an den entsprechenden Stellen erzeugt wurden.

Die Strukturen erwiesen sich sowohl an Luft als auch unter Vakuum (Hochvakuum, Ultrahochvakuum) als zeitstabil, und zwar auch dann, wenn sie und ihre Umgebung ununterbrochen mit dem Tunnelmikroskop abgebildet werden. Trotz mehrerer hundert Abbildungsprozesse fanden sich an keiner der so erzeugten Strukturen erkennbare Veränderungen, ein Befund, der besonders wichtig ist, da diese Abbildungsprozesse bei einer Anwendung als Datenspeicher den Ausleseprozessen entsprechen.

Die nun erfolgende Modifikation ist schematisch in Figur 1 beschrieben. Die Spitze des RTM wurde in dem Augenblick, in dem sie sich im Tunnelbereich (Tunnelstrom und Tunnelspannung s.o.) dicht über der Probenoberfläche genau links neben den geschriebenen Strukturen befand mittels eines elektrischen Signals an den x-Piezo sehr rasch nach rechts ausgelenkt, so daß sie die Hügelstrukturen rasch überquerte. Wesentlich war dabei, daß der z-Regelkreis des Raster-Tunnelmikroskops ausgeschaltet wurde oder die Modulation der Spannung am x-Piezo so rasch erfolgte, daß der z-Regelkreis innerhalb seiner Zeitkonstante, die auf ca. 40 ms eingestellt war, bei der Begegnung der Tunnelspitze mit den Hügelstrukturen kein Zurückziehen der Tunnelspitze noch vor erfolgter Modifikation bewirken konnte.

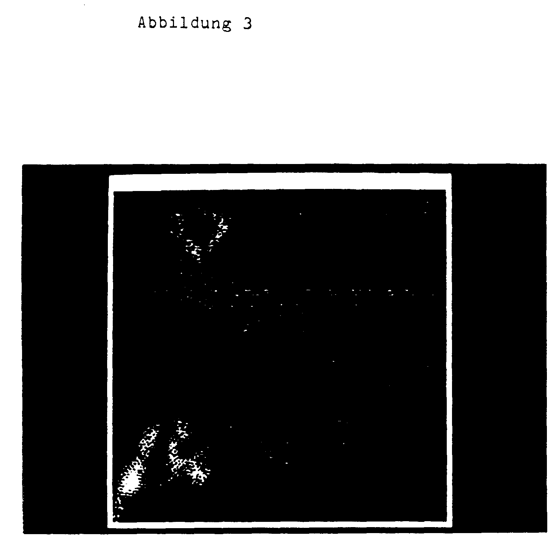

Die aus der Maßnahme resultierenden Modifikationen konnten unmittelbar nach der Operation mit atomarer Auflösung abgebildet werden. Abbildung 3 zeigt die in Abbildung 2 gezeigten Strukturen unmittelbar nach dem beschriebenen Modifikationsprozeß. Man erkennt, daß die nach wie vor atomar abgebildeten Strukturen deutlich abgeflacht wurden, wobei die Spitzen der Hügel zu einer Art Plateau umgeformt wurden. Wichtig ist, daß die atomare Ordnung des Gitters der abgebildeten Oberfläche nach wie vor erhalten blieb und keine Gitterdefekte erkennbar sind, eine wesentliche Voraussetzung für eine Reversibilität der durchgeführten Prozesse. In dem vorliegenden Fall wurde die Tunnelspitze während des Modifikationsprozesses gezielt so weit in x-Richtung ausgelenkt, daß sie alle vier Strukturen überstrich und damit auch modifizierte. Abbildung 3 zeigt, daß es auf diese Weise nicht nur möglich ist, gezielt einzelne Hügel zu modifizieren, sondern durch entsprechende Wahl der Amplitude der Modulation der Position des Piezos während des Modifikationsprozesses auch definiert ganze Zeilen von Strukturen zu modifizieren. Ferner war es auch möglich, weitere Modifikationen an denselben Strukturen durchzuführen.

Wie Abbildungen 1 bis 3 zeigen, bleibt die mit dem Tunnelmikroskop beobachtete atomare Ordnung der Oberfläche während der einzelnen Schreib- und Modifikationsprozesse vollständig erhalten, insbesondere auch unmittelbar am Ort der Modifikationen. Mikroskopische Defekte wie Versetzungen, Leerstellen oder Zwischengitteratome sind nicht zu beobachten.

Schreib- und Modifikationsprozesse führten dabei nicht zu einer beobachtbaren Veränderung der Spitze. So veränderte die Spitze durch diese Prozesse nicht ihre Länge, und es konnten auch keine Hinweise auf mögliche, während dieser Modifikationsprozesse erfolgte "tip changes" (d.h. Veränderungen des vordersten Endes der Tunnelspitze im atomaren Bereich) aus dem Abbildungsverhalten entnommen werden.

Führt man die Spitze sehr dicht über die Probe hinweg, so lassen sich die Hügelstrukturen nicht nur modifizieren oder abflachen, sondern auch wieder beseitigen. Da der Schreib- und der Löschprozeß zerstörungsfrei erfolgen, d.h. unter vollständigem Erhalt der atomaren Ordnung des abgebildeten Oberflächengitters sowohl am Ort der Modifikation als auch in deren Umgebung, läßt sich nach erfolgtem Löschen an der gleichen Position jederzeit wieder eine Struktur erzeugen. Man hat auf diese Weise also einen in beliebiger Reihenfolge an beliebiger Stelle löschbaren, modifizierbaren und wiederbeschreibbaren Datenspeicher auf atomarer Skala, dessen erzielbare Speicherdichte sich aus dem Flächenbedarf der Einezlstrukturen zu etwa 1 Terabyte pro Quadratzentimeter ergibt.

## Patentansprüche

1. Verfahren zur gezielten Modifikation und zur reversiblen Entfernung kleinster Hügelstrukturen mit Dimensionen im Nanometerbereich auf einer Festkörperoberfläche, dadurch gekennzeichnet, daß die feine Spitze einer Sonde, z.B. einer oberflächensensitiven Rastersonde, die sich in einem Abstand im Angström-Bereich über der Oberfläche befindet oder diese berührt, unter weitgehender Beibehaltung ihrer Höhe über der unstrukturierten Oberfläche bzw. Beibehaltung der Berührung der Oberfläche in Richtung parallel zur Oberfläche über die Hügelstruktur hinweggeführt wird und dabei bei Begegnung der Spitze mit der Hügelstruktur durch mechanische Krafteinwirkung zu einer Veränderung dieser Hügelstruktur führt.

2. Verfahren gemäß Anspruch 1, dadurch gekennzeichnet, daß als Sonde die Spitze eines Raster-Tunnelmikroskops (RTM) eingesetzt wird.

3. Verfahren gemäß Anspruch 1, dadurch gekennzeichnet, daß als Sonde die Spitze des Levers eines Raster-Kraftmikroskops (RKM) verwendet wird.

4. Verfahren gemäß Anspruch 1, dadurch gekennzeichnet, daß Strukturen der Oberfläche eines halbleitenden Schichtmaterials manipuliert werden.

5. Verfahren gemäß Anspruch 1, dadurch gekennzeichnet, daß es bei dem Prozeß zu einer lokalen plastischen Verformung der Hügelstrukturen kommt.

6. Verfahren zur Abbildung der Festkörperoberfläche mit Ortsauflösung im Nanometer bereich nach Durchführung der Hügelstrukturmodifikation gemäß Anspruch 1, dadurch gekennzeichnet, daß zur Abbildung dieselbe oberflächensensitive Rastersonde verwendet wird, die auch zur Hügelstrukturmodifikation verwendet wird.

7. Verwendung des Verfahrens gemäß Anspruch 1 zur Modifikation von Hügelstrukturen, die durch mechanische Deformation oder durch die lokale Anwendung von transienten elektrischen Feldern zuvor mit der gleichen oder einer anderen Sonde erzeugt wurden.

8. Verwendung des Verfahrens gemäß Anspruch 1 auf Hügelstrukturen, die sich auf der Oberfläche aufgelagert befinden und auf Hügelstrukturen, die zuvor gezielt auf der Oberfläche abgeschieden wurden.

9. Verfahren gemäß Anspruch 1, dadurch gekennzeichnet, daß die atomare Ordnung der Oberfläche auch lokal am Ort der Modifikation durch den Eingriff gemäß Anspruch 1 nicht wesentlich gestört oder zerstört wird.

10. Verwendung des Verfahrens gemäß den Ansprüchen 1 bis 5 oder 9 sowie Verwendung gemäß den Ansprüchen 7 oder 8 zur Speicherung von Informationseinheiten und zur gezielten Veränderung von einzelnen bereits gespeicherten Informationseinheiten.

11. Verwendung des Verfahrens gemäß Anspruch 1 bis 5 oder 9 und Verwendung gemäß den Ansprüchen 7, 8 oder 10 zur Speicherung von mehr als einem Bit pro Einzelhügelstruktur, wobei die Hügelstruktur durch die bestehenden Modifikationsmöglichkeiten wahlweise in einen von mindestens zwei eindeutig voneinander unterscheidbaren, definierten und zeitlich stabilen Zuständen gebracht werden kann, zusätzlich zu dem binären Zustand, daß sich an der entsprechenden Stelle keine Hügelstruktur befindet.

12. Verwendung des Verfahrens gemäß Anspruch 1 bis 5 oder 9 und Verwendung gemäß den Ansprüchen 7, 8, 10 oder 11 zum gezielten Löschen von einzelnen Informationseinheiten wie auch zum Löschen von ganzen Zeilen geschriebener Informationseinheiten.

## Claims

1. A process for the selective modification and reversible removal of extremely fine bump structures having dimensions in the nanometer range on the surface of a solid, which comprises moving the fine tip of a probe, for example a surface-sensitive scanning probe, which is located at a distance in the ångstrom range above the surface or is in contact with the surface, over the bump structure in the direction parallel to the surface while substantially maintaining its height above the unstructured surface or maintaining contact with the surface, and, when the tip encounters the bump structure, it causes a modification to this bump structure through the action of mechanical force.

2. A process as claimed in claim 1, wherein the probe employed is the tip of a scanning tunneling microscope (STM).

3. A process as claimed in claim 1, wherein the probe used is the tip of the lever of a scanning atomic force microscope (SAFM).

4. A process as claimed in claim 1, wherein the structures of the surface of a semiconducting layered material are manipulated.

5. A process as claimed in claim 1, wherein the process causes a local plastic deformation of the bump structures.

6. A process for imaging the surface of a solid at a local resolution in the nanometer range after the bump structure modification as claimed in claim 1, which comprises carrying out the imaging using the same surface-sensitive scanning probe as also used for the bump structure modification.

7. The use of a process as claimed in claim 1 for modifying bump structures previously produced using the same or another probe by mechanical deformation or by the local use of transient electrical fields.

8. The use of a process as claimed in claim 1 on bump structures located on the surface and bump structures previously deposited selectively on the surface.

9. A process as claimed in claim 1, wherein the atomic order of the surface is not significantly disturbed or destroyed, even locally at the site of modification, by the intervention as claimed in claim 1.

10. The use of a process as claimed in any of claims 1 to 5 or 9 and the use as claimed in claim 7 or 8 for storing information units and for selectively modifying individual and prestored information units.

11. The use of a process as claimed in any of claims 1 to 5 or 9 and the use as claimed in claim 7, 8 or 10 for storing more than one bit per individual bump structure, where the bump structure may if desired be converted into one of at least two clearly mutually differentiable, defined and time-stable states, in addition to the binary state, where no bump surface structure is present at the corresponding point, by the existing modification methods.

12. The use of a process as claimed in any of claims 1 to 5 or 9 and the use as claimed in claim 7, 8, 10 or 11 for selectively erasing individual information units and for erasing entire lines of written information units.

## Revendications

1. Procédé pour modifier à dessein et enlever de façon réversible des structures à protubérance minuscule de dimension du domaine du nanomètre sur une surface d'un corps solide, caractérisé par le fait que la pointe fine d'une sonde, par exemple une sonde d'exploration par trame sensible en surface, se trouvant à distance dans la plage des Angström, au-dessus de la surface et entrant en contact avec celle-ci, est déplacée tout en conservant largement son niveau, au-dessus de la surface non structurée respectivement en conservant le contact de la surface dans une direction parallèle à la surface, au-dessus de la structure à protubérance et, lors de la rencontre de la pointe avec la structure à protubérance exécute une modification de cette structure à protubérance, par l'action d'une force mécanique.

2. Procédé selon la revendication 1, caractérisé par le fait qu'on utilise comme sonde la pointe d'un microscope à effet tunnel à balayage (RTM).

3. Procédé selon la revendication 1, caractérisé par le fait que l'on utilise comme sonde la pointe du levier d'un microscope dynamométrique à balayage (RKM).

4. Procédé selon la revendication 1, caractérisé par le fait que l'on manipule des structures de la surface d'un matériau en couche semi-conducteur.

5. Procédé selon la revendication 1, caractérisé par le fait que dans le processus se produit une déformation locale plastique des structures à protubérance.

6. Procédé de représentation de la surface d'un corps solide avec une résolution locale dans la plage nanométrique après exécution de la modification de structure à protubérance selon la revendication 1, caractérisé par le fait que, pour effectuer la représentation, on utilise la même sonde à balayage à sensibilité de surface que celle utilisée également pour la modification de la structure à protubérance.

7. Utilisation du procédé selon la revendication 1, pour la modification de structures à protubérance ayant été produites par déformation mécanique ou par application locale de champs électriques transitoires, au préalable, avec la même sonde ou avec une autre sonde.

8. Utilisation du procédé selon la revendication 1 sur des structures à protubérance qui se trouvent placées sur la surface et sur des structures à protubérance qui ont été obtenues auparavant à dessein par déposition sur la surface.

9. Procédé selon la revendication 1, caractérisé par le fait que l'agencement atomique de la surface n'est pas non plus notablement perturbé, ni détruit localement sur le site de la modification, par l'action faite selon la revendication 1.

10. Utilisation du procédé selon les revendications 1 à 5 ou 9, ainsi que l'utilisation selon la revendication 7 ou 8, pour stocker des unités d'information et pour obtenir une modification, à dessein, d'unités d'information individuelles ayant déjà été stockées.

11. Utilisation du procédé selon les revendications 1 à 5 ou 9 et utilisation selon les revendications 7, 8 ou 10 pour le stockage de plus d'un bit par structure à protubérance individuel, la structure à protubérance pouvant être portée, par les possibilités de modification existante, à volonté, dans l'un d'au moins deux états susceptibles d'être distingués l'un de l'autre de façon univoque, définis et temporellement stables, en plus de l'état binaire, du fait qu'aucune structure à protubérance ne se trouve à l'endroit correspondant.

12. Utilisation du procédé selon les revendications 1 à 5 ou 9 et utilisation selon les revendications 7, 8, 10 ou 11 pour l'effacement à dessein d'unités d'information individuelles, ainsi qu'également pour l'effacement de lignes entières d'unités d'information écrites.
